# EUROPÄISCHE PATENTSCHRIFT

(11) **EP 1 953 460 B1**
(45) Veröffentlichungstag und Bekanntmachung des Hinweises auf die Patenterteilung: **12.12.2012**
(21) Anmeldenummer: 08001706.4
(22) Anmeldetag: 30.01.2008
(51) Int. Cl.: F24D 19/10, F24J 2/40

(54) **Solarregelung**
Solar control
Réglage solaire

(30) Priorität: 30.01.2007 AT 1452007
(43) Veröffentlichungstag der Anmeldung: 06.08.2008
(73) Patentinhaber: Logotherm Regelsysteme GmbH, 3251 Purgstall (AT)
(72) Erfinder: Atzenhofer, Werner, 3251 Purgstall/Erlauf (AT); Mandl, Klaus, 3261 Steinakirchen/Forst (AT)
(74) Vertreter: Puchberger, Peter

(56) Entgegenhaltungen:
- DE-A1- 2 658 709
- DE-A1- 2 735 369
- GB-A- 2 064 098
- US-A- 5 601 075

## Beschreibung

Die Erfindung betrifft ein Verfahren zur Regelung einer Solaranlage, die einen Sonnenkollektor, einen Kaltwasserzulauf, einen Warmwasserablauf und eine Solarladepumpe im Kaltwasserzulauf umfasst.

Herkömmliche Solarregelungen arbeiten üblicherweise mit einer Temperaturdifferenzregelung. Dabei wird die Temperatur des aus dem Solarkollektor strömenden aufgeheizten Strömungsmediums mit dem aus dem Solarwärmetauscher rückströmenden Strömungsmediums verglichen. Ein Problem liegt darin, dass die Temperaturerfassung des Strömungsmediums zumeist ungenau ist. Zum Einen wird durch die Temperaturfühler nicht die tatsächliche Austrittstemperatur des Strömungsmediums gemessen, sondern eine Kombination zwischen Mediumstemperatur und Chassistemperatur. Bei üblichen Solaranlagen kann zB die Austrittstemperatur des Strömungsmediums um 2k höher sein als die durch die üblichen Kollektorfühler, Tauchhülsen gemessene Temperatur. Zum Anderen erfolgen immer nur punktuell gemessene Temperaturmessungen, wobei das Messergebnis stark von der räumlichen Anordnung der Messfühler abhängt. Dies führt zu dem Nachteil, dass die Solarladepumpe entweder zu früh oder zu spät eingeschaltet wird. Das frühzeitige Einschalten bewirkt einen Wärmerücktransport vom Solarspeicher zum Solarkollektor und das zu späte Einschalten bewirkt eine Reduzierung des Nutzungsgrades.

Die DE 26 58 709 A1 zeigt eine bekannte Differenztemperatursteuerung, wobei die Temperaturdifferenz zwischen Speicher und Heißwasserabfluss des Solarkollektors gemessen und zur Steuerung verwendet wird. Die Regelung umfasst auch einen Zeitgeber, der den Einschaltzeitpunkt für die Solarladepumpe steuert. Die Pumpenlaufzeit, also das Abschalten der Pumpe, wird von der Temperaturdifferenzmessung gesteuert.

Die US 5,601,075 A1 offenbart ein Verfahren zur Regelung einer Solaranlage, die einen Sonnenkollektor, einen Kaltwasserzulauf, einen Warmwasserablauf und eine Solarladepumpe im Kaltwasserzulauf umfasst. Die Regelung dieser Solaranlage erfolgt durch einen einzigen Temperaturfühler, welcher ein Signal liefert, das in der Steuerung verwendet wird. Die Regelung hängt nur noch von einem einzigen Temperatursensor ab, anstatt von mindestens zwei Sensoren.

Die DE 27 35 369 A1 zeigt eine Steuerung für eine Solaranlage, die einen Sonnenkollektor, einen Kaltwasserzulauf, einen Warmwasserablauf und eine Solarladepumpe im Kaltwasserzulauf umfasst. Ein derartiges Verfahren ist auch aus der GB 20 64 098 A.

Alle diese bekannten Solarregelungen weisen die zuvor beschriebenen Nachteile auf. Durch aufwendigere Messmethoden und Messapparaturen ist es möglich, diese Nachteile zu vermeiden. Allerdings erhöht ein größerer Steuerungsaufwand die Kosten der Herstellung, der Montage, der Wartung und etwaiger Reparaturen. Aufgabe der vorliegenden Erfindung ist es die genannten Nachteile zu vermeiden und eine gute Solarregelung mit möglichst niedrigem Aufwand vorzusehen. Insbesondere soll eine Alternative zu den bekannten Verfahren zur Regelung von Solaranlagen bereitgestellt werden.

Die erfindungsgemäße Solarregelung ist dadurch gekennzeichnet, dass die Solarladepumpe nach einer durch einen Zeitgeber voreingestellten Pumpenlaufdauer abgestellt wird; die Temperatur von einem im Warmwasserablauf des Solarkollektors vorgesehenen Temperaturfühler ermittelt wird; die Solarladepumpe bei Temperaturanstieg um einen vorgegebenen Anstiegsschwellwert über einen Temperaturminimalwert wieder angestellt wird; wobei nach Abschalten der Solarladepumpe bei abfallender Temperatur der jeweils letzte Temperaturwert gemessen und als Temperaturminimalwert gespeichert wird.

Nach weiteren Merkmalen ist für das Einschalten der Pumpe ein Minimaltemperaturschwellwert eingestellt. Die Pumpenlaufdauer ist üblicherweise ein voreingestellter Wert. Zum Beispiel kann in bevorzugter Weise die Pumpenlaufdauer etwa 10 Minuten und die Anstiegsschwellenwerte können je etwa 5k betragen.

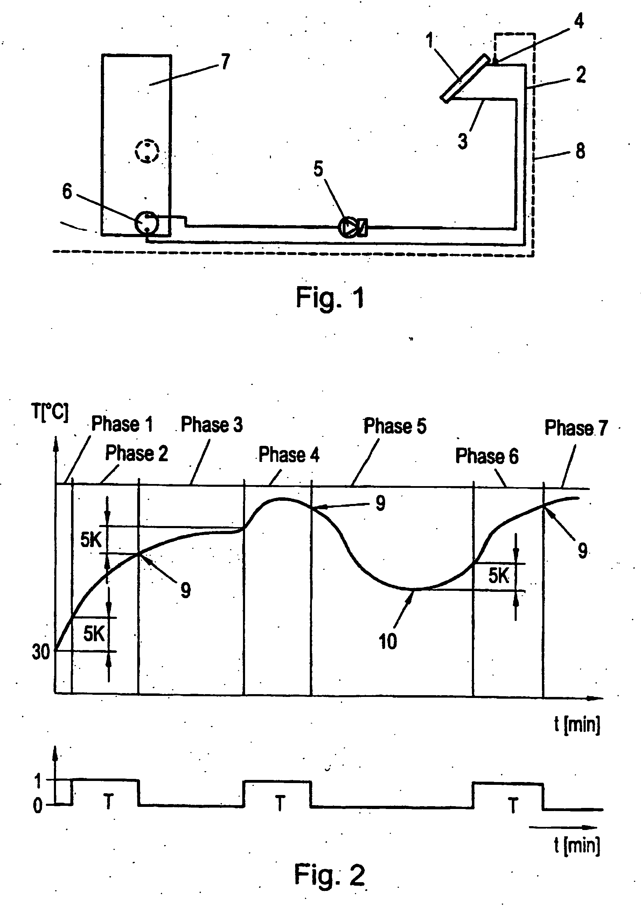

Im folgenden wird die Erfindung anhand der Fig. 1 und 2 näher beschrieben. Fig. 1 zeigt das Schema der Solarregelung und Fig. 2 ein Diagramm mit typischen Regelungsphasen.

Fig. 1 zeigt die einfache Anordnung der erfindungsgemäßen Solarregelung. Der Solarkollektor 1 verfügt über einen Warmwasserablauf 2 und einen Kaltwasserzulauf 3. Im Warmwasserablauf 2 sitzt unmittelbar nach dem Solarkollektor 1 der Kollektorfühler 4. Im Kaltwasserzulauf 3 liegt die Solarladepumpe 5, die in eingeschaltetem

Zustand das Strömungsmedium, welches hier Wasser ist, aus dem Wärmetauscher 6 zum Solarkollektor fördert. Das erhitzte Strömungsmedium fließt über den Warmwasserablauf 2 zum Wärmetauscher 6 und gibt dort seine Wärmeenergie an den Solarspeicher 7 ab. Im Vergleich zu bekannten Solarregelungen ist das Besondere an dieser Solaranlage, dass nur ein einziger Kollektorfühler 4 vorgesehen ist, der den Temperaturverlauf am Warmwasserablauf 2 misst. Über die Messleitung 8 und eine hier nicht dargestellte Steuerelektronik wird die Solarladepumpe 5 gesteuert.

Anhand der Fig. 2 wird die Solarregelung gemäß Erfindung näher erläutert. Der obere Teil der Fig. 2 zeigt das Diagramm, auf der vertikal die Temperatur in Grad Celsius und horizontal die Zeit in Minuten eingetragen ist. Der untere Teil der Fig. 2 zeigt den zugehörigen Pumpenstatus, wobei Null ausgeschaltet und Eins eingeschaltet bedeutet. Nachfolgend werden die dargestellten Phasen beschrieben:
Phase 1.
   Ist die Solarladepumpe ausgeschaltet, so wird die tiefste Kollektortemperatur abgespeichert. Das untere Limit der abgespeicherten Kollektortemperatur beträgt 30°C. Steigt die Kollektortemperatur über die gespeicherte minimale Kollektortemperatur +5K, so wird die Solarladepumpe eingeschaltet.
Phase 2:
   Die Pumpe bleibt in dieser Phase fix für T = 10 Minuten eingeschaltet
Phase 3:
   Die Solarladepumpe wird nach Ablauf der 10 Minuten ausgeschaltet. In dieser Phase wird die niedrigste Kollektortemperatur abgespeichert. Diese Temperatur ist dann die Kollektorsollwerttemperatur. Erst wenn die aktuelle Kollektortemperatur über die zuletzt abgespeicherte Kollektorsollwerttemperatur +5K steigt, wird die Solarladepumpe wieder eingeschaltet. Dieser Prüfschritt ist zur Überprüfung, ob Energie vom Kollektor zum Solarspeicher übertragen wird (und nicht umgekehrt), notwendig.
Phase 4:
   Die Pumpe bleibt solange eingeschaltet, bis die Zeit von T = 10 Minuten abgelaufen ist.
Phase 5:
   Die Solarladepumpe wird nach Ablauf der 10 Minuten ausgeschaltet. In dieser Phase wird die niedrigste Kollektortemperatur (Temperaturminimalwert) abgespeichert. Steigt die Kollektortemperatur nicht über die niedrigste zuletzt abgespeicherte Temperaturminimalwert des Kollektors+5K, bleibt die Solarladepumpe ausgeschaltet (Prüfschritt).
Phase 6:
   Steigt die aktuelle Kollektortemperatur über die niedrigste, zuletzt abgespeicherte Temperaturminimalwert des Kollektors+5K, so wird die Solarladepumpe für 10 Minuten wieder eingeschaltet.
Phase 7:
   Funktion wie in Phase 3 oder 5.

Die Pumpenlaufdauer ist ein voreingestellter Wert, der im geschilderten Beispiel 10 Minuten beträgt. Dieser Wert kann den jeweiligen Gegebenheiten angepasst werden. Gleiches gilt auch für den Minimaltemperaturschwellenwert und die Anstiegsschwellenwerte.

Die Solarregelung gemäß Erfindung nutzt den Solarkollektor in Verbindung mit einem Prüfschritt, der darin besteht, das nach dem Abschalten der Solarladepumpe der Temperaturverlauf durch den Kollektorfühler gemessen wird. Der Beginn der Prüfschritte ist in Fig. 2 jeweils mit dem Bezugszeichen 9 bezeichnet. Der in Phase 5 festgestellte und gespeicherte Minimalwert der Kollektortemperatur ist mit dem Bezugszeichen 10 bezeichnet.

Der untere Grenzwert der abgespeicherten Kollektortemperatur in Phase 1 mit 30°C bewirkt, dass die Solarladepumpe nicht bei tieferen Temperaturen einschaltet, wenn die Temperaturen für das System zu niedrig sind. Der Anstiegsschwellenwert von jeweils 5K in den Phasen 3 und 5 stellt sicher, dass die Solarladepumpe nur dann einschaltet, wenn der Solarkollektor genügend Energie liefern kann. Die Pumpenlaufdauer ist stets unabhängig vom Temperaturverlauf. Erst nach dem Abschalten der Solarfadepumpe wird der weitere Temperaturverlauf gemessen und je nach Temperaturvelauf wird die Pumpe wieder eingeschaltet (Ende der Phase 3 und Übergang zur Phase 4) oder es wird nach dem Abschalten so lange zugewartet, bis die Kollektortemperatur über einen Minimalwert wieder ansteigt.

Die erfindungsgemäße Solarregelung hat auch den Vorteil, dass sich alle mit der Zeit verändernden Parameter wie Wärmetauscherverkalkung, Verschmutzung und dergleichen und auch die Temperaturfühlerpositionierung nicht wesentlich auswirken. Die optimale Energieübertragung zwischen Strömungsmedium und Solarspeicher wird sichergestellt, obwohl die Regelung und die zugehörigen Apparaturen sehr einfach aufgebaut sein können.

## Patentansprüche

1. Verfahren zur Regelung einer Solaranlage, die einen Sonnenkollektor, einen Kaltwasserzulauf, einen Warmwasserablauf und eine Solarladepumpe im Kaltwasserzulauf umfasst,
**dadurch gekennzeichnet, dass**
die Solarladepumpe (5) nach einer durch einen Zeitgeber voreingestellten Pumpenlaufdauer abgestellt wird;
die Temperatur von einem im Warmwasserablauf (2) des Solarkollektors (1) vorgesehenen Temperaturfühler (4) ermittelt wird;
die Solarladepumpe (5) bei Temperaturanstieg um einen vorgegebenen Anstiegsschwellwert über einen Temperaturminimalwert (10) wieder angestellt wird;
wobei nach Abschalten der Solarladepumpe (5) bei abfallender Temperatur der jeweils letzte Temperaturwert gemessen und als Temperaturminimalwert (10) gespeichert wird.

2. Verfahren zur Regelung einer Solaranlage nach Anspruch 1, **dadurch gekennzeichnet, dass** für das Einschalten der Pumpe (5) ein Minimaltemperaturschwellwert eingestellt ist.

3. Verfahren zur Regelung einer Solaranlage nach Anspruch 1 oder 2, **dadurch gekennzeichnet, dass** die Pumpenlaufdauer ein voreingestellter Wert ist.

4. Verfahren zur Regelung einer Solaranlage nach einem der Ansprüche 1 bis 3, **dadurch gekennzeichnet, dass** die Pumpenlaufdauer etwa zehn Minuten und die Anstiegsschwellwerte je etwa 5K betragen.

## Claims

1. Method for controlling a solar installation which comprises a solar collector, a cold water inlet, a hot water outlet and a solar charging pump in the cold water inlet,
**characterised in that**
the solar charging pump (5) is switched off after a period of pump operation pre-set by means of a timer;
the temperature is determined by a temperature sensor (4) provided in the hot water outlet (2) of the solar collector (1);
the solar charging pump (5) is re-started when the temperature rises by a predetermined threshold of increase above a minimum temperature value (10);
while, after the solar charging pump (5) is switched off, as the temperature drops the last temperature value in each case is measured and is stored as the minimum temperature value (10).

2. Method for controlling a solar installation according to claim 1, **characterised in that** a minimum temperature threshold is selected for switching on the pump (5).

3. Method for controlling a solar installation according to claim 1 or 2, **characterised in that** the period of operation of the pump is a pre-set value.

4. Method for controlling a solar installation according to one of claims 1 to 3, **characterised in that** the period of operation of the pump is about ten minutes and the thresholds of increase are each about 5K.

## Revendications

1. Procédé de régulation d'une installation solaire, qui comprend un collecteur solaire, une arrivée d'eau froide, une sortie d'eau chaude et une pompe de charge solaire dans l'arrivée d'eau froide,
**caractérisé en ce que**
la pompe de charge solaire (5) est arrêtée après une durée de marche de pompe préréglée par une horloge ;
la température d'une sonde de température (4) prévue dans la sortie d'eau chaude (2) du collecteur solaire (1) est enregistrée ;
la pompe de charge solaire (5) est remise en marche en cas de hausse de température, d'une valeur seuil de hausse prédéfinie, au-dessus d'une valeur minimale de température (10) ;
la dernière valeur de température étant mesurée à température descendante après l'arrêt de la pompe de charge solaire (5) et mémorisée en tant que valeur minimale de température (10).

2. Procédé de régulation d'une installation solaire selon la revendication 1, **caractérisé en ce qu'**une valeur seuil de température minimale est réglée pour la mise en marche de la pompe (5).

3. Procédé de régulation d'une installation solaire selon la revendication 1 ou 2, **caractérisé en ce que** la durée de marche de pompe est une valeur préréglée.

4. Procédé de régulation d'une installation solaire selon une des revendications 1 à 3, **caractérisé en ce que** la durée de marche de pompe est d'environ dix minutes et les valeurs seuils de hausse sont à chaque fois d'environ 5 K.
